# EUROPEAN PATENT APPLICATION

(11) **EP 4 297 123 A1**
(43) Date of publication of application: **27.12.2023**
(21) Application number: 23179972.7
(22) Date of filing: 19.06.2023
(51) Int. Cl.: H01M 4/131, H01M 4/36, H01M 4/48, H01M 4/485, H01M 4/62, H01M 10/0525

(54) **ELECTRODE MATERIAL**

(30) Priority: 20.06.2022 JP 2022098926
(71) Applicant: KABUSHIKI KAISHA TOSHIBA, Minato-ku Tokyo 105-0023 (JP)
(72) Inventor: Sasakawa, Tetsuya, Tokyo, 105-0023 (JP); Yoshima, Kazuomi, Tokyo, 105-0023 (JP); Morimoto, Sayaka, Tokyo, 105-0023 (JP)
(74) Representative: Hoffmann Eitle

(57) **Abstract**

In general, according to one approach, an electrode material (101) is provided. The electrode material (101) includes at least one of niobium titanium oxide or titanium dioxide. A moisture content measured by a Karl Fischer method is in a range of 2000 ppm or more and 10,000 ppm or less.

## Description

### FIELD

Disclosure relates generally to an electrode material.

### BACKGROUND

In order to improve the life performance of an electrode using niobium titanium oxide, a cellulose-based binder such as carboxymethyl cellulose (CMC) was added to the electrode. However, in the electrode using the niobium titanium oxide, there is a problem that a mixture layer formed on a current collector tends to harden, and cracking tends to occur in a case where the electrode density is increased.

### BRIEF DESCRIPTION OF THE DRAWINGS

FIG. 1 is a plan view schematically showing an electrode material according to an approach.
FIG. 2 is a schematic diagram showing an example of pressing in a method according to the approach.
FIG. 3 is a schematic diagram showing an electrode material to be held by the method according to the approach.
FIG. 4 is a schematic diagram showing an example of cutting in a method according to the approach.
FIG. 5 is a plan view schematically showing an electrode produced by the method according to the approach.
FIG. 6 is a cross-sectional view of a secondary battery according to the approach taken along a direction perpendicular to a terminal extending direction.
FIG. 7 is an enlarged cross-sectional view of a portion A shown in FIG. 6.
FIG. 8 is a partially cutaway cross-sectional view of the secondary battery according to the approach.
FIG. 9 is a side view of the battery shown in FIG. 8.

### DETAILED DESCRIPTION

In general, according to one approach, an electrode material is provided. The electrode material includes at least one of niobium titanium oxide or titanium dioxide. A moisture content measured by a Karl Fischer method is 2000 ppm or more and 10,000 ppm or less.

### (First Approach)

A first approach relates to an electrode material. The electrode material is a precursor of an electrode. The electrode material is subjected to processing such as cutting to obtain the electrode. The electrode can be used for, for example, a lithium ion battery, a nonaqueous electrolyte battery, or the like. Therefore, the electrode material is usually handled in a dry environment in which the amount of water is controlled. On the other hand, in a case where the moisture content of the electrode material containing at least one of niobium titanium oxide or titanium dioxide is low, the electrode material tends to harden, and the electrode material may be broken when the electrode density is increased. Further, cutting (for example, punching) the electrode material into a predetermined shape or size causes a defect such as cracking, chipping, or peeling. The flexural strength is improved by reducing the binder content of the electrode material, but the binding property between members constituting the electrode material is degraded. Therefore, there is a risk that powder falls from the electrode material in processing processes such as drying, pressing, and cutting, and self-discharge increases. In a case where the electrode density is reduced, the energy density of the battery is reduced.

In the electrode material according to the first approach, the moisture content measured by the Karl Fischer method is 2000 ppm or more and 10,000 ppm or less. The reason for this will be described below. In a case where the moisture content of the electrode material is less than 2000 ppm, the flexural strength of the electrode material decreases. In addition, the number of defects such as cracking, chipping, and peeling during handling of the electrode material increases. In a case where the moisture content of the electrode material exceeds 10,000 ppm, the flexural strength of the electrode material is high, but the number of defects such as cracking, chipping, and peeling during handling of the electrode material increases. This is because the binder contained in the electrode material swells due to moisture, and the binding strength between members (for example, the binding property between a mixture layer and a current collector) decreases. By setting the moisture content of the electrode material to 2000 ppm or more and 10,000 ppm or less, the flexural strength of the electrode material can be improved. In addition, it is possible to suppress defects such as cracking, chipping, and peeling during handling of the electrode material for cutting or the like. As a result, it is possible to suppress self-discharge of the battery. A more preferable range of the moisture content is 3000 ppm or more and 10,000 ppm or less.

The electrode material will be described in detail.

The electrode material can include a current collector and an active material-containing layer (also referred to as a mixture layer). The active material-containing layer may be stacked or formed on one surface or both surfaces of the current collector. The active material-containing layer can contain an active material, and optionally a conductive agent and a binder.

The active material contains at least one of niobium titanium oxide or titanium dioxide. Examples of the niobium titanium oxide include monoclinic niobium titanium oxide. Examples of the monoclinic niobium titanium oxide include a compound represented by LiₓTi_{1-y}M1_{y}Nb_{2-z}M2_{z}O_{7+δ}. M1 is at least one selected from the group consisting of Zr, Si, and Sn. M2 is at least one selected from the group consisting of V, Ta, and Bi. The subscripts in the composition formula satisfy 0 ≤ x ≤ 5, 0 ≤ y < 1, 0 ≤ z < 2, and -0.3 ≤ δ ≤ 0.3. Specific examples of the monoclinic niobium titanium oxide include LiₓNb₂TiO₇ (0 ≤ x ≤ 5).

Other examples of the monoclinic niobium titanium oxide include a compound represented by LiₓTi_{1-y}M3_{y+z}Nb_{2-z}O_{7-δ}. M3 is at least one selected from Mg, Fe, Ni, Co, W, Ta, and Mo. The subscripts in the composition formula satisfy 0 ≤ x ≤ 5, 0 ≤ y < 1, 0 ≤ z < 2, and -0.3 ≤ δ ≤ 0.3.

The niobium titanium oxide may contain inevitable impurities. Examples of the inevitable impurities include K, Na, Si, and P.

The niobium titanium oxide may contain lithium ions by charging. Alternatively, the niobium titanium oxide may be synthesized as lithium-containing niobium titanium oxide by using a lithium-containing compound such as a lithium carbonate as a raw material of the niobium titanium oxide.

Examples of the titanium dioxide (TiO₂) include monoclinic titanium dioxide, anatase titanium dioxide, rutile titanium dioxide, and bronze titanium dioxide (TiO₂(B)). In the titanium dioxide of each crystal structure, the composition before charge can be represented by TiO₂, and the composition after charge can be represented by LiₓTiO₂ (x is 0 ≤ x ≤ 1) .

The titanium dioxide may contain inevitable impurities. Examples of the inevitable impurities include K, Na, Cs, Ba, Ca, Si, and P.

It is desirable that the niobium titanium oxide not contain lithium in a state in which the niobium titanium oxide is contained in a slurry for producing the electrode material by mixing the niobium titanium oxide with an aqueous solvent to be described later. It is desirable that the titanium dioxide not contain lithium in a state in which the titanium dioxide is contained in a slurry for producing the electrode material by mixing the titanium dioxide with the aqueous solvent. As a result, the slurry for producing the electrode material is not alkaline, so that degradation of the current collector can be suppressed.

One kind or two or more kinds of active materials can be used. The active material may contain a second active material other than the niobium titanium oxide and the titanium dioxide. Examples of the second active material include lithium titanate having a ramsdellite structure (for example, Li_{2+y}Ti₃O₇, 0 ≤ y ≤ 3), lithium titanate having a spinel structure (for example, Li₄₊ₓTi₅O₁₂, 0 ≤ x ≤ 3), hollandite type titanium composite oxide, and orthorhombic titanium composite oxide.

The active material may take the form of particles. The particles of the active material may be, for example, primary particles alone, secondary particles in which primary particles are aggregated, or a mixture of primary particles and secondary particles.

The conductive agent is blended in order to improve current collection performance and suppress contact resistance between the active material and the current collector. Examples of the conductive agent include vapor grown carbon fiber (VGCF), a carbon nanotube, carbon black such as acetylene black, and carbonaceous substances such as graphite. One of them may be used as the conductive agent, or two or more of them may be used in combination as the conductive agent. Alternatively, instead of using the conductive agent, carbon coating or electron conductive inorganic material coating may be applied to the surface of the active material particles.

The binder can fill gaps of the active material and bind the active material and the current collector. The binder has affinity with an aqueous solvent and can be dispersed or dissolved in the aqueous solvent. Examples of the binder include carboxymethyl cellulose (CMC), and salts of CMC. Examples of the salts of CMC include a sodium salt of CMC and a potassium salt of CMC. One of them may be used as the binder, or two or more of them may be used in combination as the binder. Since the binder containing CMC and/or a salt of CMC can cover the surface of the niobium titanium oxide particles, the reaction between the niobium titanium oxide particles and a nonaqueous electrolyte can be suppressed.

The binder containing the CMC and/or the salt of CMC may contain styrene-butadiene rubber. Accordingly, the binding property between the active material-containing layer and the current collector can be improved.

The aqueous solvent may be only water or a polar solvent containing water.

The active material-containing layer may contain a solid electrolyte. The lithium ion conductivity of the solid electrolyte can be, for example, 1 × 10⁻⁶ Scm⁻¹ or more at 25 °C. Examples of the lithium ion conductive solid electrolyte include a lithium ion conductive oxide-based solid electrolyte and a lithium ion conductive sulfide-based solid electrolyte. Examples of the lithium ion conductive oxide-based solid electrolyte include a lithium phosphate solid electrolyte having a NASICON type structure, amorphous LIPON (Li_{2.9}PO_{3.3}N_{0.46}), and LLZ (Li₇La₃Zr₂O₁₂) having a garnet type structure.

As for the blending ratio of the active material, the conductive agent, and the binder in the active material-containing layer, as an example, it is preferable to blend the active material, the conductive agent, and the binder in proportions of 68 mass% or higher and 96 mass% or lower, 2 mass% or higher and 30 mass% or lower, and 2 mass% or higher and 30 mass% or lower, respectively. In a case where the mass percentage of the conductive agent is 2 mass% or higher, the current collection performance of the active material-containing layer can be improved. In a case where the mass percentage of the binder is 2 mass% or higher, the binding property between the active material-containing layer and the current collector is sufficient, and excellent cycle performance can be expected. On the other hand, it is preferable that the mass percentage of each of the conductive agent and the binder be 30 mass% or lower in order to increase the capacity.

As the material of the current collector, a material that is electrochemically stable at a potential at which lithium (Li) is inserted into and extracted from the active material is used. An example of the current collector is copper, nickel, stainless steel, aluminum, or an aluminum alloy containing one or more elements selected from the group consisting of Mg, Ti, Zn, Mn, Fe, Cu, and Si. The thickness of the current collector is preferably 5 um or more and 20 um or less. The current collector having such a thickness can balance the strength and weight reduction of the electrode.

In addition, the current collector may include a portion where the active material-containing layer is not formed on the surface thereof. This portion can act as a collector tab.

The Karl Fischer method, which is a method for measuring the moisture content of an electrode material, will be described.

An electrode piece (including a current collector) having a size of 3 mm × 2 cm is cut out from the electrode material. It is necessary to prevent drying of the prepared electrode piece before the moisture content is measured. Specifically, for example, after the electrode piece is prepared, the electrode piece is housed in a sealed container and brought to a measuring instrument. Alternatively, the electrode piece is prepared at a location of the measuring instrument, and measurement is immediately performed on the spot.

The moisture content of the sample prepared as described above is measured by a coulometric titration method using a Karl Fischer moisture meter (Model VA-06, manufactured by Mitsubishi Chemical Analytech Co., Ltd.). Specifically, the measurement is performed under the condition that the sample is heated to 140 °C and nitrogen gas is injected at a flow rate of 200 ml/min. The moisture content is converted from the amount of electricity consumed in the reaction between water and iodine.

In the electrode material according to the first approach described above, since the moisture content measured by the Karl Fischer method is in a range of 2000 ppm to 10,000 ppm, the flexural strength can be improved regardless of the density of the electrode material. In addition, it is possible to suppress defects such as cracking, chipping, and peeling during handling of the electrode material. Therefore, it is possible to provide an electrode which has a high density, has reduced defects such as cracking, chipping, and peeling, and is less likely to cause self-discharge.

### (Second Approach)

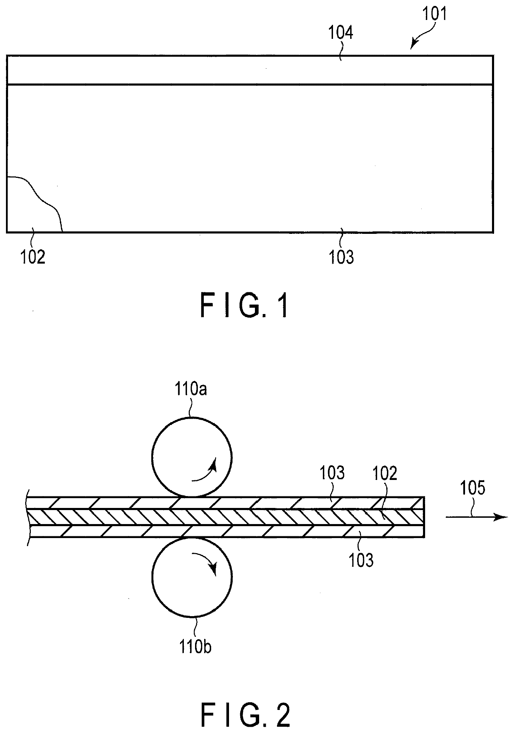

A second approach relates to a method for producing an electrode material. A method for producing an electrode material includes: applying a slurry containing at least one of niobium titanium oxide or titanium dioxide and water to a current collector; drying the slurry applied to the current collector to form an active material-containing layer; and storing the current collector on which the active material-containing layer is formed in an atmosphere with a dew point of 30 °C to 50 °C. According to this method, for example, the electrode material according to the first approach can be produced. The application and the drying may be performed on each surface of the current collector. For example, a current collector (stack) on which an active material-containing layer is formed may be obtained by applying a slurry containing water and at least one of niobium titanium oxide or titanium dioxide to a surface of the current collector and then drying the slurry, and applying the slurry to the other surface of the current collector and then drying the slurry. Further, the slurry application and drying on the other surface of the current collector may be omitted. An example of the method for producing an electrode material will be described with reference to FIGS. 1 to 3.

FIG. 1 is a plan view schematically showing an example of the electrode material. An electrode material 101 shown in FIG. 1 includes a rectangular or belt-shaped current collector 102 and an active material-containing layer 103 provided on a part of each of both main surfaces of the current collector 102. The active material-containing layer 103 is formed except for an end portion 104 parallel to the long side direction of the main surface of the current collector 102. A portion of the current collector 102 where the active material-containing layer 103 is not formed can function as a collector tab or a lead of an electrode. The active material-containing layer 103 may be supported only on one main surface of the current collector 102.

The active material-containing slurry is applied to one main surface of the current collector 102 except for an end portion of the current collector 102 in the short side direction, and then dried to form the active material-containing layer 103. The end portion of the current collector 102 in the short-side direction becomes the active material-containing layer non-forming portion 104. Next, the active material-containing slurry is applied to the other main surface of the current collector 102 except for a portion corresponding to the active material-containing layer-non-formed part 104, and then dried to form the active material-containing layer 103. Thus, a stack is obtained.

The drying temperature at which the slurry is dried can be in the range of 80 °C or higher and 130 °C or lower. It is possible to remove moisture in the active material-containing layer 103 while suppressing thermal degradation of the material constituting the active material-containing layer 103. In a case where the drying temperature is in the range of 80 °C or higher and 130 °C or lower, the drying time can be set to, for example, a range of 10 seconds or more and 600 seconds or less.

After the drying, a step of cutting the stack may be performed as necessary.

The active material-containing slurry is prepared, for example, by dispersing an active material, a conductive agent, and a binder in an aqueous solvent. The active material, the conductive agent, the binder, and the aqueous solvent are as described in the first approach. The method for applying the active material-containing slurry to the current collector 102 is not limited to the above-described method, and for example, the active material-containing slurry may be applied except for both ends in the short side direction of the current collector 102.

Next, the active material-containing layer 103 on the current collector 102 is pressed (for example, roll pressing). As shown in FIG. 2, press rollers 110a and 110b face each other with the current collector 102 and the active material-containing layer 103 interposed therebetween. The press rollers 110a and 110b are disposed such that their respective rotation axes are parallel to a direction intersecting the machine direction 105 of the current collector 102. When the press roller 110a rotates counterclockwise and the press roller 110b rotates clockwise, the press rollers 110a and 110b rotate in directions opposite to each other, and the active material-containing layer 103 on the current collector 102 passes through a gap between the press rollers 110a and 110b in the rotating state, so that the active material-containing layer 103 is pressed.

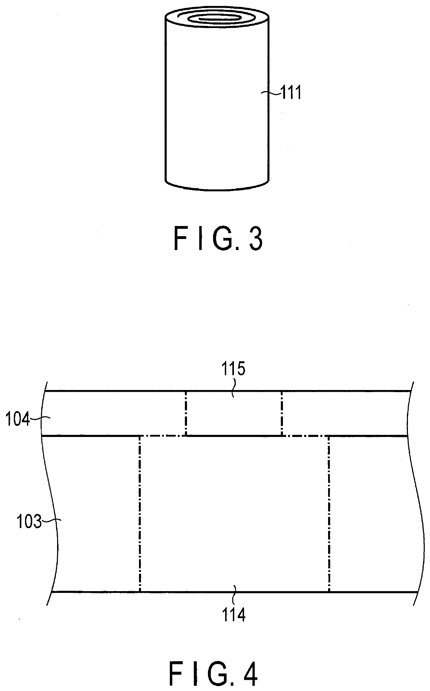

The stack after the pressing is wound up by a winding roller. Thereafter, as shown in, for example, FIG. 3, the stack is stored in the form of a spirally wound product 111. The stack is stored, for example, in an atmosphere with a dew point of 30 °C or higher and 50 °C or lower. Therefore, moisture can be held in the electrode material. The time for storing the stack may be set so that the moisture content of the electrode material increases to a target value, and can be set to, for example, 1 minute or more and 2500 hours or less. For the storage, a thermostatic bath or the like can be used. The form in which the stack is stored is not limited to the wound product. For example, the stack may be cut into a predetermined shape or size in an atmosphere with a dew point of 30 °C or higher and 50 °C or lower and stored in an atmosphere with a dew point of 30 °C or higher and 50 °C or lower.

The method according to the second approach described above includes: applying a slurry containing water and at least one of niobium titanium oxide or titanium dioxide to a current collector; drying the slurry applied to the current collector to form an active material-containing layer on the current collector; and storing the current collector on which the active material-containing layer is formed in an atmosphere with a dew point of 30 °C or higher and 50 °C or lower. By this method, it is possible to provide a high-density electrode material which is excellent in flexural strength and in which defects such as cracking, chipping, and peeling during handling of the electrode material are reduced, as in the electrode material according to the first approach.

### (Third Approach)

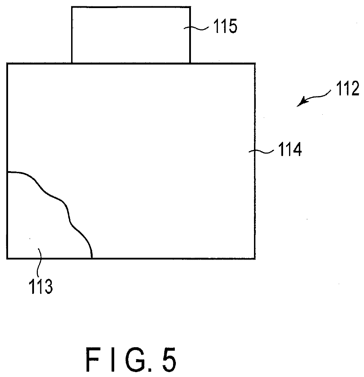

A third approach relates to a method for producing a battery. A method for producing a battery includes cutting an electrode material to obtain a first electrode; preparing an electrode group including the first electrode and a second electrode; housing the electrode group in a container member; drying the electrode group housed in the container member at a temperature of 80 °C or higher and 150 °C or lower; and supplying a nonaqueous electrolyte to the electrode group housed in the container member. As the electrode material, the electrode material according to the first approach or the electrode material produced by the method according to the second approach can be used. The method according to the third approach will be described with reference to FIGS. 4 and 5.

### <Step of Obtaining First Electrode>

As shown in FIG. 4, for example, the electrode material 101 having the structure shown in FIG. 1 is cut into a predetermined shape by punching with a punching die. In FIG. 4, a cut side portion is indicated by a one-dot chain line. FIG. 5 shows a first electrode 112 obtained by the cutting. As shown in FIG. 5, the first electrode 112 includes a rectangular current collector 113, active material-containing layers 114 provided on both main surfaces of the current collector 113, and a collector tab 115 protruding in a strip shape from an end portion of the current collector 113. The collector tab 115 is formed by punching the active material-containing layer non-forming portion 104 of the electrode material 101 into a predetermined shape. The active material-containing layer 103 is not formed on the active material-containing layer non-forming portion 104

Examples of the cutting by the punching include cutting (punching) by a Thomson blade.

As the electrode material, the electrode material according to the first approach can be used. The electrode material produced by the method according to the second approach may be cut into a predetermined shape in an atmosphere with a dew point of 30 °C or higher and 50 °C or lower to obtain the first electrode.

The first electrode may be a positive electrode or a negative electrode, but is desirably a negative electrode.

### <Step of Producing Electrode Group>

The electrode group is produced, for example, by disposing a separator between the first electrode and the second electrode. The shape of the electrode group is not particularly limited, and for example, it is possible to use a stack of the first electrode, the separator, and the second electrode, a stack in which the first electrode, the separator, and the second electrode are wound in a flat or cylindrical shape, a stack in which the first electrode, the separator, and the second electrode are bent in a zigzag manner, or the like.

The second electrode may include a second current collector and a second active material-containing layer. The second active material-containing layer may be formed on one surface or both surfaces of the second current collector. The second active material-containing layer can contain the second active material, and optionally a conductive agent and a binder. The second electrode may be a positive electrode or a negative electrode, but can be a positive electrode in a case where the first electrode is a negative electrode.

As the second active material, for example, oxide or sulfide can be used. The second electrode may contain one kind of compound alone as an active material, or may contain two or more kinds of compounds in combination. Examples of the oxide and the sulfide include compounds capable of inserting and desorbing Li or Li ions.

Examples of such compounds include manganese dioxide (MnOz), iron oxide, copper oxide, nickel oxide, lithium manganese composite oxide (for example, LiₓMn₂O₄ or LiₓMnO₂; 0 < x ≤ 1), lithium nickel composite oxide (for example, LiₓNiO₂; 0 < x ≤ 1), lithium-cobalt composite oxide (for example, LiₓCoO₂; 0 < x ≤ 1), lithium nickel cobalt composite oxide (for example, LiₓNi_{1-y}Co_{y}O₂; 0 < x ≤ 1, 0 < y < 1), lithium manganese cobalt composite oxide (for example, LiₓMn_{y}Co_{1-y}O₂; 0 < x ≤ 1, 0 < y < 1), lithium manganese nickel composite oxide having a spinel structure (for example, LiₓMn_{2-y}Ni_{y}O₄; 0 < x ≤ 1, 0 < y < 2), lithium phosphorus oxide having an olivine structure (for example, LiₓFePO₄; 0 < x ≤ 1, LiₓFe_{1-y}Mn_{y}PO₄; 0 < x ≤ 1, 0 < y ≤ 1, LiₓCoPO₄; 0 < x ≤ 1), iron sulfate (Fe₂(SO₄)₃), vanadium oxide (for example, V₂O₅), LiNiₓCo_{y}M_{z}O₂ (x + y + z = 1, x ≥ 0.8, M consisting of Mn and Al), and lithium nickel cobalt manganese composite oxide (LiₓNi_{1-y-z}Co_{y}Mn_{z}O₂; 0 < x ≤ 1, 0 < y < 1, 0 < z < 1, y + z < 1) .

The primary particle size of the second active material is preferably 100 nm or more and 1 µm or less. The second active material having a primary particle size of 100 nm or more is easy to handle in industrial production. The second active material having a primary particle size of 1 µm or less can smoothly diffuse lithium ions in a solid.

The specific surface area of the second active material is preferably 0.1 m²/g or more and 10 m²/g or less. The second active material having a specific surface area of 0.1 m²/g or more can sufficiently secure insertion/extraction sites of Li ions. The second active material having a specific surface area of 10 m²/g or less is easy to handle in industrial production, and can ensure good charge-and-discharge cycle performance.

The binder is blended to fill gaps of the dispersed second active material and to bind the second active material and the second current collector. Examples of the binder include polytetrafluoroethylene (PTFE), polyvinylidene fluoride (PVdF), fluororubber, polyacrylic acid compounds, imide compounds, carboxymethyl cellulose (CMC), and salts of CMC. One of them may be used as the binder, or two or more of them may be used in combination as the binder.

The conductive agent is blended to improve current collection performance and to suppress contact resistance between the second active material and the second current collector. Examples of the conductive agent include vapor grown carbon fiber (VGCF), carbon black such as acetylene black, and carbonaceous substances such as graphite. One of them may be used as the conductive agent, or two or more of them may be used in combination as the conductive agent. Further, the conductive agent can be omitted.

In the second active material-containing layer, the second active material and the binder are preferably blended in proportions of 80 mass% or higher and 98 mass% or lower and 2 mass% or higher and 20 mass% or lower, respectively.

By setting the mass percentage of the binder to 2 mass% or higher, sufficient electrode strength can be obtained. In addition, the binder can function as an insulator. Therefore, in a case where the mass percentage of the binder is 20 mass% or lower, the amount of the insulator contained in the electrode is reduced, so that the internal resistance can be reduced.

In a case where the conductive agent is added, the second active material, the binder, and the conductive agent are preferably blended in proportions of 77 mass% or higher and 95 mass% or lower, 2 mass% or higher and 20 mass% or lower, and 3 mass% or higher and 15 mass% or lower, respectively.

By setting the mass percentage of the conductive agent to 3 mass% or higher, the above-described effect can be exhibited. In addition, by setting the mass percentage of the conductive agent to 15 mass% or lower, the ratio of the conductive agent in contact with the electrolyte can be reduced. In a case where this ratio is low, decomposition of the electrolyte can be reduced under high-temperature storage.

The second current collector is preferably aluminum foil or aluminum alloy foil containing one or more elements selected from the group consisting of Mg, Ti, Zn, Ni, Cr, Mn, Fe, Cu, and Si.

The thickness of the aluminum foil or the aluminum alloy foil is preferably 5 µm or more and 20 µm or less, and more preferably 15 µm or less. The purity of the aluminum foil is preferably 99 mass% or higher. The mass percentages of transition metals contained in the aluminum foil or the aluminum alloy, such as iron, copper, nickel, and chromium, are preferably 1 mass% or lower.

In addition, the second current collector may include a portion where the second active material-containing layer is not formed on the surface thereof. This portion can act as a second collector tab.

For the second electrode, for example, a slurry is prepared by suspending the second active material, the conductive agent, and the binder in a solvent. The slurry is applied to one or both of the surfaces of the second current collector. Next, the applied slurry is dried to obtain a stack of the second active material-containing layer and the second current collector. Thereafter, the stack is pressed. In this way, the second electrode is produced. Alternatively, the second electrode may be produced by the following method. First, the second active material, a conductive agent, and a binder are mixed to obtain a mixture. Then, the mixture is formed into pellets. Subsequently, the second electrode can be obtained by disposing these pellets on the second current collector.

The separator may be, for example, a porous film containing polyethylene (PE), polypropylene (PP), cellulose, or polyvinylidene fluoride (PVdF), or synthetic resin nonwoven fabric. From the viewpoint of safety, it is preferable to use a porous film formed from polyethylene or polypropylene. This is because these porous films can melt at a constant temperature and block the current.

As the separator, an electrolyte layer containing a solid electrolyte may be used. The lithium ion conductivity of the solid electrolyte can be, for example, 1 × 10⁻⁶ Scm⁻¹ or more at 25 °C. Examples of the lithium ion conductive solid electrolyte include a lithium ion conductive oxide-based solid electrolyte and a lithium ion conductive sulfide-based solid electrolyte. Examples of the lithium ion conductive oxide-based solid electrolyte include a lithium phosphate solid electrolyte having a NASICON type structure, amorphous LIPON (Li_{2.9}PO_{3.3}N_{0.46}), and LLZ (Li₇La₃Zr₂O₁₂) having a garnet type structure.

### <Step of Housing in Container Member >

The electrode group is housed in the container member. The container member is not sealed and remains in a released state. Before the housing, a collector lead may be electrically connected to each of the first electrode and the second electrode of the electrode group.

As the container member, for example, a container made of a laminate film or a metal container can be used.

The thickness of the laminate film is, for example, 0.5 mm or less, preferably 0.2 mm or less.

As the laminate film, a multilayer film including a plurality of resin layers and a metal layer interposed between the resin layers is used. The resin layers include, for example, polymer materials such as polypropylene (PP), polyethylene (PE), nylon, and polyethylene terephthalate (PET). The metal layer is preferably made of aluminum foil or aluminum alloy foil for weight reduction. The laminate film can be formed into the shape of the container member by performing sealing by thermal fusion.

The thickness of the wall of the metal container is, for example, 1 mm or less, more preferably 0.5 mm or less, and still more preferably 0.2 mm or less.

The metal container is made of, for example, aluminum or an aluminum alloy. The aluminum alloy preferably contains elements such as magnesium, zinc, and silicon. In a case where the aluminum alloy contains transition metals such as iron, copper, nickel, and chromium, the transition metal contents of the aluminum alloy are preferably 100 ppm by mass or less.

The shape of the container member is not particularly limited. The shape of the container member may be, for example, a flat shape (thin shape), a square shape, a cylindrical shape, a coin shape, a button shape, or the like. The container member can be appropriately selected according to the size of the battery and the application of the battery.

The collector lead can be formed of, for example, a conductive material. Examples of the conductive material can include the same type of material as the current collector of the electrode material or the second current collector of the second electrode.

### <Step of Drying Electrode Group>

The electrode group housed in the container member is dried at a temperature of 80 °C or higher and 150 °C or lower. The container member is subjected to the drying step without being sealed.

By setting the drying temperature to the range of 80 °C or higher and 150 °C or lower, moisture contained in the electrode group can be removed without thermally degrading the materials contained in the electrode group. In a case where the drying temperature is in the range of 80 °C or higher and 150 °C or lower, the drying time can be set to, for example, a range of 1 hour or more and 72 hours or less.

### <Step of Supplying Nonaqueous Electrolyte to Electrode Group Housed in Container Member>

The nonaqueous electrolyte is held in the electrode group while the container member is in the released state. The holding step is performed, for example, in a dehumidified atmosphere or dry air.

As the nonaqueous electrolyte, for example, a liquid nonaqueous electrolyte or a gel nonaqueous electrolyte can be used. The liquid nonaqueous electrolyte is prepared by dissolving an electrolyte salt as a solute in an organic solvent. The concentration of the electrolyte salt is preferably 0.5 mol/L or higher and 2.5 mol/L or lower.

Examples of the electrolyte salt include lithium salts such as lithium perchlorate (LiClO₄), lithium hexafluorophosphate (LiPF₆), lithium tetrafluoroborate (LiBF₄), lithium arsenic hexafluoride (LiAsF₆), lithium trifluoromethanesulfonate (LiCF₃SO₃), and lithium bistrifluoromethylsulfonylimide (LiN (CF₃SO₂)₂), and mixtures thereof. The electrolyte salt is preferably hardly oxidized even at a high potential, and is most preferably LiPF₆.

Examples of the organic solvent include a propylene carbonate (PC), an ethylene carbonate (EC), cyclic carbonates such as a vinylene carbonate (VC), a diethyl carbonate (DEC), a dimethyl carbonate (DMC), chain carbonates such as a methyl ethyl carbonate (MEC), tetrahydrofuran (THF), 2-methyl tetrahydrofuran (2MeTHF), cyclic ethers such as dioxolane (DOX), dimethoxyethane (DME), chain ethers such as diethoxy ethane (DEE), γ-butyrolactone (GBL), acetonitrile (AN), and sulfolane (SL). These organic solvents can be used alone or as a mixed solvent.

The gel nonaqueous electrolyte is prepared by combining a liquid nonaqueous electrolyte and a polymer material. Examples of the polymer material include polyvinylidene fluoride (PVdF), polyacrylonitrile (PAN), polyethylene oxide (PEO), or mixtures thereof.

Alternatively, as the nonaqueous electrolyte, in addition to the liquid nonaqueous electrolyte and the gel nonaqueous electrolyte, a room temperature molten salt (ionic melt) containing lithium ions, a polymer solid electrolyte, an inorganic solid electrolyte, and the like may be used.

The room temperature molten salt (ionic melt) refers to a compound that can exist as a liquid at room temperature (15 °C or higher and 25 °C or lower) among organic salts composed of a combination of organic cations and anions. The room temperature molten salt includes a room temperature molten salt which exists alone as a liquid, a room temperature molten salt which becomes a liquid by being mixed with an electrolyte salt, a room temperature molten salt which becomes a liquid by being dissolved in an organic solvent, or a mixture thereof. In general, a room temperature molten salt used in a secondary battery has a melting point of 25 °C or lower. The organic cations generally have a quaternary ammonium skeleton.

The polymer solid electrolyte is prepared by dissolving an electrolyte salt in a polymer material and solidifying the solution.

The inorganic solid electrolyte is a lithium ion conductive solid substance. The lithium ion conductivity of the solid electrolyte can be, for example, 1 × 10⁻⁶ Scm⁻¹ or more at 25 °C. Examples of the lithium ion conductive solid electrolyte are as described above.

After the above steps, the container member is sealed to obtain a battery.

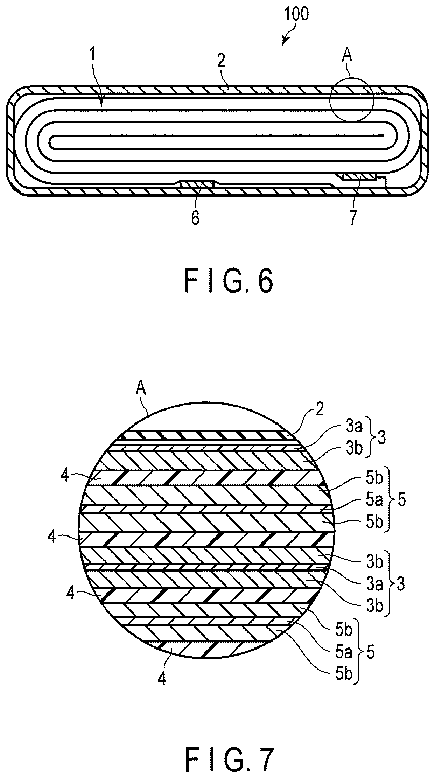

An example of the battery produced by the method according to the present approach will be described with reference to FIGS. 6 to 9.

FIG. 6 is a cross-sectional view schematically showing an example of a secondary battery that can be produced by the method according to the present approach. FIG. 7 is an enlarged cross-sectional view of a part A of the secondary battery shown in FIG. 6.

A secondary battery 100 shown in FIGS. 6 and 7 includes a bag-shaped container member 2 shown in FIGS. 6 and 7, an electrode group 1 shown in FIG. 6, and an electrolyte (not shown). The electrode group 1 and the electrolyte are housed in the bag-shaped container member 2. The electrolyte (not shown) is held in the electrode group 1.

The bag-shaped container member 2 is made of a laminated film including two resin layers and a metal layer interposed between the resin layers.

As shown in FIG. 6, the electrode group 1 is a flat wound electrode group. As shown in FIG. 7, the flat wound electrode group 1 includes a negative electrode 3, a separator 4, and a positive electrode 5. The separator 4 is interposed between the negative electrode 3 and the positive electrode 5.

The negative electrode 3 includes a negative electrode current collector 3a and a negative electrode active material-containing layer 3b. In the portion of the negative electrode 3 located in the outermost part of the wound electrode group 1, as shown in FIG. 7, the negative electrode active material-containing layer 3b is formed only on the inner surface side of the negative electrode current collector 3a. In the other portion of the negative electrode 3, the negative electrode active material-containing layer 3b is formed on each surface of the negative electrode current collector 3a.

The positive electrode 5 includes a positive electrode current collector 5a and a positive electrode active material-containing layer 5b formed on each surface of the positive electrode current collector 5a.

As shown in FIG. 6, a negative electrode terminal 6 and a positive electrode terminal 7 are located near the outer peripheral end of the wound electrode group 1. The negative electrode terminal 6 is electrically connected to a portion located at the outermost part of the negative electrode current collector 3a. The positive electrode terminal 7 is electrically connected to a portion of the positive electrode current collector 5a located at the outermost part. The negative electrode terminal 6 and the positive electrode terminal 7 are extended out from the opening of the bag-shaped container member 2. A thermoplastic resin layer is provided on the inner surface of the bag-shaped container member 2, and the opening is sealed by thermally fusing the thermoplastic resin layer.

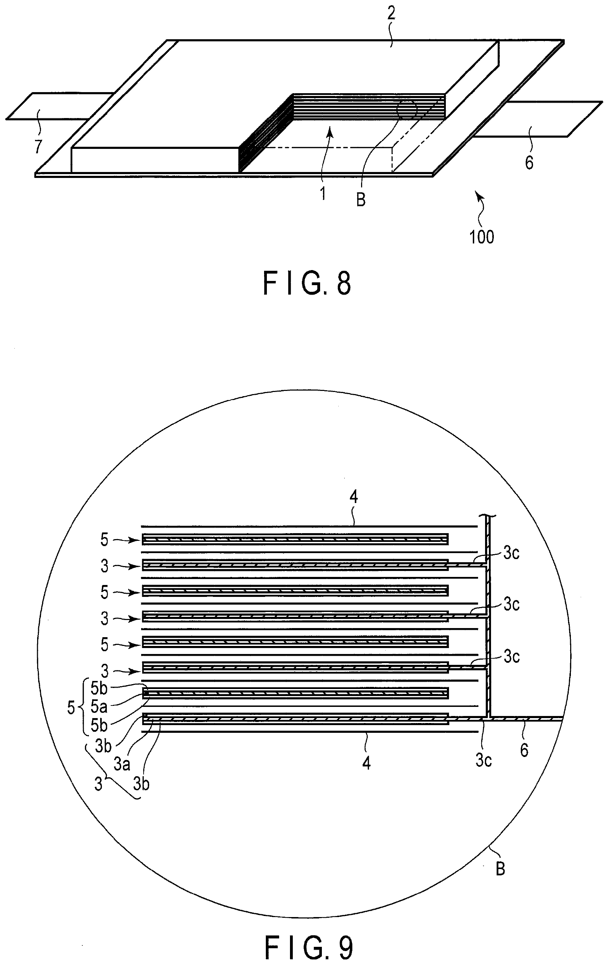

The secondary battery according to the approach is not limited to the secondary battery having the configuration shown in FIGS. 6 and 7, and may be, for example, a battery having a configuration shown in FIGS. 8 and 9.

FIG. 8 is a partially cutaway perspective view schematically showing another example of the secondary battery according to the approach. FIG. 9 is an enlarged cross-sectional view of a portion B of the secondary battery shown in FIG. 8.

A secondary battery 100 shown in FIGS. 8 and 9 includes an electrode group 1 shown in FIGS. 8 and 9, a container member 2 shown in FIG. 8, and an electrolyte (not shown). The electrode group 1 and the electrolyte are housed in the container member 2. The electrolyte is held in the electrode group 1.

The container member 2 is made of a laminated film including two resin layers and a metal layer interposed therebetween.

As shown in FIG. 9, the electrode group 1 is a stacked electrode group. The stacked electrode group 1 has a structure in which a negative electrode 3 and a positive electrode 5 are alternately stacked with a separator 4 interposed therebetween.

The electrode group 1 includes negative electrodes 3. Each of the negative electrodes 3 includes a negative electrode current collector 3a, and a negative electrode active material-containing layer 3b supported on each of both the surfaces of the negative electrode current collector 3a. The electrode group 1 includes positive electrodes 5. Each of the positive electrodes 5 includes a positive electrode current collector 5a, and a positive electrode active material-containing layer 5b supported on each of both the surfaces of the positive electrode current collector 5a.

The negative electrode current collector 3a of each of the negative electrodes 3 includes a portion 3c in which the negative electrode active material-containing layer 3b is not supported on any surface in one side. The portion 3c functions as a negative electrode tab. As shown in FIG. 8, the portion 3c functioning as the negative electrode tab does not overlap with the positive electrode 5. The plurality of negative electrode tabs (portions 3c) are electrically connected to the band-like negative electrode terminal 6. The tip of the band-like negative electrode terminal 6 is drawn out of the container member 2.

Although not shown, the positive electrode current collector 5a of each of the positive electrodes 5 includes a portion in which the positive electrode active material-containing layer 5b is not supported on any surface in one side. The portion functions as a positive electrode tab. The positive electrode tab does not overlap with the negative electrode 3, as with the negative electrode tab (portion 3c). The positive electrode tab is located on the opposite side of the electrode group 1 with respect to the negative electrode tab (portion 3c). The positive electrode tab is electrically connected to the band-like positive electrode terminal 7. The tip of the band-like positive electrode terminal 7 is located on the opposite side of the negative electrode terminal 6, and drawn out of the container member 2.

According to the method according to the third approach described above, the electrode material according to the first approach or the electrode material prepared by the method according to the second approach is cut to obtain the first electrode. Therefore, it is possible to reduce defects such as cracking, chipping, and peeling during the cutting of the electrode material, and thus it is possible to obtain a battery that has a high energy density and is less likely to cause self-discharge.

The battery produced by the method according to the third approach may be used as a battery module or may be incorporated in a battery pack. The battery according to the present approach is suitably used for applications requiring excellent cycle performance when a large current is taken out. Specifically, the battery is used as a power source of a digital camera, or as a battery for a vehicle such as a two-wheel to four-wheel hybrid electric automobile, a two-wheel to four-wheel electric automobile, an assist bicycle, or a railway vehicle (for example, a train), or as a stationary battery, for example. In particular, the battery is suitably used as an on-vehicle battery mounted on a vehicle.

### (Examples)

Hereinafter, Examples of the present invention will be described in detail with reference to the drawings, but the present invention is not limited to Examples described below.

### <Preparation of Electrode Material>

### <Example 1-1>

As an active material, monoclinic niobium titanium oxide particles having a composition represented by the formula TiNb₂O₇ were prepared. In addition, acetylene black as a conductive agent, carboxymethyl cellulose as a binder, and styrene butadiene rubber as a binder were prepared. These were mixed in pure water so that the mass ratio of the active material, the acetylene black, the carboxymethyl cellulose, and the styrene butadiene rubber was 90: 5: 2.5: 2.5 to obtain a slurry. This slurry was applied onto both surfaces of a current collector made of aluminum foil having a thickness of 12 µm to obtain a coating film, and the coating film was dried at 120 °C for 180 seconds. Thus, a stack in which an active material-containing layer was formed on both surfaces of the current collector was obtained. The amount of the slurry applied per side of the active material-containing layer was 150 g/m². Next, the obtained stack was subjected to roll pressing so that the density of the active material-containing layer was 2.65 g/cm³. Next, this stack was stored in an environment with a dew point of 40 °C for 30 minutes to obtain an electrode material.

### <Example 1-2>

The time for storing the stack in an environment with a dew point of 40 °C was set to 120 hours. Except for the time for storing the stack, an electrode material was produced in the same manner as in Example 1-1.

### <Example 1-3>

The time for storing the stack in an environment with a dew point of 40 °C was set to 240 hours. Except for the time for storing the stack, an electrode material was produced in the same manner as in Example 1-1.

### <Example 1-4>

The time for storing the stack in an environment with a dew point of 40 °C was set to 480 hours. Except for the time for storing the stack, an electrode material was produced in the same manner as in Example 1-1.

### <Example 1-5>

The time for storing the stack in an environment with a dew point of 40 °C was set to 720 hours. Except for the time for storing the stack, an electrode material was produced in the same manner as in Example 1-1.

### <Example 1-6>

The time for storing the stack in an environment with a dew point of 40 °C was set to 2500 hours. Except for the time for storing the stack, an electrode material was produced in the same manner as in Example 1-1.

### <Comparative Example 1-1>

The stack was not stored in an environment with a dew point of 40 °C, and vacuum drying was performed on the stack at 120 °C for 12 hours. Except that the stack was not stored in an environment with a dew point of 40 °C and the vacuum drying was performed on the stack at 120 °C for 12 hours, an electrode material was produced in the same manner as in Example 1-1.

### <Comparative Example 1-2>

The stack was not stored in an environment with a dew point of 40 °C. Except that the stack was not stored in an environment with a dew point of 40 °C, an electrode material was produced in the same manner as in Example 1-1.

### <Comparative Example 1-3>

The time for storing the stack in an environment with a dew point of 40 °C was set to 4300 hours. Except for the time for storing the stack, an electrode material was produced in the same manner as in Example 1-1.

### <Example 2-1>

As an active material, bronze type TiO₂(B) was used. Except that the bronze type TiO₂(B) was used as the active material, an electrode material was produced in the same manner as in Example 1-1.

### <Example 2-2>

The time for storing the stack in an environment with a dew point of 40 °C was set to 120 hours. Except for the time for storing the stack, an electrode material was produced in the same manner as in Example 2-1.

### <Example 2-3>

The time for storing the stack in an environment with a dew point of 40 °C was set to 240 hours. Except for the time for storing the stack, an electrode material was produced in the same manner as in Example 2-1.

### <Example 2-4>

The time for storing the stack in an environment with a dew point of 40 °C was set to 480 hours. Except for the time for storing the stack, an electrode material was produced in the same manner as in Example 2-1.

### <Example 2-5>

The time for storing the stack in an environment with a dew point of 40 °C was set to 720 hours. Except for the time for storing the stack, an electrode material was produced in the same manner as in Example 2-1.

### <Example 2-6>

The time for storing the stack in an environment with a dew point of 40 °C was set to 2500 hours. Except for the time for storing the stack, an electrode material was produced in the same manner as in Example 2-1.

### <Comparative Example 2-1>

The stack was not stored in an environment with a dew point of 40 °C, and vacuum drying was performed on the stack at 120 °C for 12 hours. Except that the stack was not stored in an environment with a dew point of 40 °C and the vacuum drying was performed on the stack at 120 °C for 12 hours, an electrode material was produced in the same manner as in Example 2-1.

### <Comparative Example 2-2>

The stack was not stored in an environment with a dew point of 40 °C. Except that the stack was not stored in an environment with a dew point of 40 °C, an electrode material was produced in the same manner as in Example 2-1.

### <Comparative Example 2-3>

The time for storing the stack in an environment with a dew point of 40 °C was set to 4300 hours. Except for the time for storing the stack, an electrode material was produced in the same manner as in Example 2-1.

The moisture content of each electrode material was measured by the Karl Fischer method according to the method described above, and the measurement results are shown in Tables 1 and 2.

For each electrode material, a 180° bending test and confirmation of a cutting defect were performed by a method described below.

### 180° Bending Test Method

The electrode material was punched into a shape of 50 mm × 50 mm by a puncher using a Thomson blade to prepare a test electrode. The test electrode was brought into contact with a round bar having a diameter of 0.5 mm to 3.5 mm, and was bent at 180° to observe the presence or absence of a crack in the active material-containing layer. The diameter of the round bar was reduced by 0.5 mm from 3.5 mm, and the test was terminated when cracking occurred in the active material-containing layer. The round bar's minimum diameter at which cracking does not occur is shown in Tables 1 and 2.

### Method for Confirming Cutting Defect

The electrode material was punched into a shape of 50 mm × 50 mm by a puncher using a Thomson blade to prepare ten test electrodes. The outer periphery of each of the test electrodes was observed with a stereomicroscope. In a case where cracking of the active material-containing layer, cracking of the current collector, or peeling of the active material-containing layer was observed in the electrode, the electrode was determined as a cutting defect. The number of cutting defects is shown in Tables 1 and 2.

**(Table 1)**

| Table 1 | Active material | Moisture content (ppm) | 180°C bending test Minimum diameter (mm) | Number of cutting defects |
|---|---|---|---|---|
| Example 1-1 | TiNb₂O₇ | 2000 | 1.5 | 0 |
| Example 1-2 | TiNb₂O₇ | 2500 | 1.5 | 0 |
| Example 1-3 | TiNb₂O₇ | 3000 | 1.0 | 0 |
| Example 1-4 | TiNb₂O₇ | 4000 | 0.5 | 0 |
| Example 1-5 | TiNb₂O₇ | 5000 | 0.5 | 0 |
| Example 1-6 | TiNb₂O₇ | 10000 | 0.5 | 0 |
| Comparative Example 1-1 | TiNb₂O₇ | 1000 | 3.0 | 4 |
| Comparative Example 1-2 | TiNb₂O₇ | 1800 | 2.5 | 2 |
| Comparative Example 1-3 | TiNb₂O₇ | 15000 | 0.5 | 2 |

**(Table 2)**

| Table 2 | Active material | Moisture content (ppm) | 180°C bending test Minimum diameter (mm) | Number of cutting defects |
|---|---|---|---|---|
| Example 2-1 | TiO₂ (B) | 2000 | 2.0 | 0 |
| Example 2-2 | TiO₂ (B) | 2500 | 1.5 | 0 |
| Example 2-3 | TiO₂ (B) | 3000 | 1.0 | 0 |
| Example 2-4 | TiO₂ (B) | 4000 | 1.0 | 0 |
| Example 2-5 | TiO₂ (B) | 5000 | 0.5 | 0 |
| Example 2-6 | TiO₂ (B) | 10000 | 0.5 | 0 |
| Comparative Example 2-1 | TiO₂ (B) | 1000 | 3.5 | 6 |
| Comparative Example 2-2 | TiO₂ (B) | 1800 | 3.0 | 3 |
| Comparative Example 2-3 | TiO₂ (B) | 15000 | 0.5 | 2 |

Table 1 shows the performance of the electrode materials containing niobium titanium oxide. For the electrode materials of Examples 1-1 to 1-6, the minimum diameter of the round bar in the 180° bending test was smaller than that in Comparative Examples 1-1 and 1-2. In the electrode materials of Examples 1-1 to 1-6, there was no occurrence of a cutting defect at all. Therefore, the electrodes obtained by cutting were less likely to cause self-discharge.

In the electrode materials of Comparative Examples 1-1 and 1-2, the moisture content measured by the Karl Fischer method was lower than 2000 ppm. Therefore, for the electrode materials of Comparative Examples 1-1 and 1-2, the minimum diameter of the round bar in the 180° bending test was large. Accordingly, a cutting defect occurred in the electrode materials of Comparative Examples 1-1 and 1-2. In addition, in the electrode material of Comparative Example 1-3, the moisture content measured by the Karl Fischer method exceeded 10,000 ppm and therefore a cutting defect occurred, although the minimum diameter of the round bar in the 180° bending test was small. This is because the binding property between the active material-containing layer and the current collector was degraded by swelling of the binder.

From the comparison of the electrode materials of Examples 1-1 to 1-6, it is found that the minimum diameter of the round bar decreases as the moisture content increases. To improve the flexural strength, the moisture content is preferably 3000 ppm or more, more preferably 4000 ppm or more.

Table 2 shows the performance of the electrode materials containing titanium dioxide. As is clear from the results in Table 2, for the electrode materials of Examples 2-1 to 2-6, the minimum diameter of the round bar in the 180° bending test was smaller than that in Comparative Examples 2-1 and 2-2. In the electrode materials of Examples 2-1 to 2-6, there was no occurrence of a cutting defect at all. Therefore, the electrodes obtained by cutting were less likely to cause self-discharge.

From the comparison of the electrode materials of Examples 2-1 to 2-6, it is found that the minimum diameter of the round bar decreases as the moisture content increases. To improve the flexural strength, the moisture content is preferably 3000 ppm or more, more preferably 5000 ppm or more.

From the results of Tables 1 and 2, it was confirmed that no defect occurred in the electrode material in a case where each of the niobium titanium oxide and titanium dioxide was used alone. In addition, it is apparent that even in a case where an electrode is produced using an electrode material containing both niobium titanium oxide and titanium dioxide, defects can be avoided.

According to the electrode material according to at least one of the approaches or the examples, the electrode material contains at least one of niobium titanium oxide or titanium dioxide, and has a moisture content of 2000 ppm or more and 10,000 ppm or less as measured by the Karl Fischer method, so that it is possible to suppress the occurrence of defects such as cracking, chipping, and peeling during handling such as cutting, and it is possible to provide a high-density electrode material and electrode.

Hereinafter, the invention according to the approaches will be additionally described.
<1> An electrode material containing at least one of niobium titanium oxide or titanium dioxide, wherein a moisture content measured by a Karl Fischer method is in a range of 2000 ppm or more and 10,000 ppm or less.
<2> The electrode material according to clause <1>, further containing at least one of carboxymethylcellulose or a carboxymethylcellulose salt.
<3> The electrode material according to clause <1> or clause <2>, wherein the moisture content is in a range of 3000 ppm or more and 10,000 ppm or less.
<4> The electrode material according to any one of clauses <1> to <3>, wherein the niobium titanium oxide contains at least one selected from the group consisting of niobium titanium oxide represented by the general formula LiₓTi_{1-y}M1_{y}Nb_{2-z}M2_{z}O_{7+δ} and niobium titanium oxide represented by the general formula LiₓTi_{1-y}M3_{y+z}Nb_{2-z}O_{7-δ}, where
   M1 is at least one selected from the group consisting of Zr, Si, and Sn, M2 is at least one selected from the group consisting of V, Ta, and Bi, M3 is at least one selected from the group consisting of Mg, Fe, Ni, Co, W, Ta, and Mo, x satisfies 0 ≤ x ≤ 5, y satisfies 0 ≤ y < 1, z satisfies 0 ≤ z < 2, and δ satisfies -0.3 ≤ δ ≤ 0.3.
<5> The electrode material according to any one of clauses <1> to <4>, wherein the titanium dioxide contains at least one selected from the group consisting of monoclinic titanium dioxide, anatase titanium dioxide, rutile titanium dioxide, and bronze titanium dioxide.
<6> The electrode material according to any one of clauses <1> to <5>, including: an active material-containing layer; and a current collector on which the active material-containing layer is provided, wherein the active material-containing layer contains at least one material of the niobium titanium oxide or the titanium dioxide.
<7> A method for producing an electrode material includes: applying a slurry containing water and at least one of niobium titanium oxide or titanium dioxide to a current collector; drying the slurry applied to the current collector to form an active material-containing layer; and storing the current collector on which the active material-containing layer is formed in an atmosphere with a dew point in a range of 30 °C to 50 °C.
<8> The method for producing an electrode material according to clause <7>, wherein the slurry further contains at least one of carboxymethylcellulose or a carboxymethylcellulose salt.
<9> The method for producing an electrode material according to clause <7> or clause <8>, wherein the storing is performed for in a range of 1 minute or more and 2500 hours or less.
<10> The method for producing an electrode material according to any one of clauses <7> to <9>, wherein the drying is performed at a temperature in a range of 80 °C to 130 °C.
<11> The method for producing an electrode material according to any one of clauses <7> to <10>, wherein the stack is pressed and then stored in an atmosphere with a dew point in a range of 30 °C to 50 °C.
<12> A method for producing a battery includes: cutting the electrode material according to any one of clauses <1> to <6> to obtain a first electrode; preparing an electrode group including the first electrode and a second electrode; housing the electrode group in a container member; drying the electrode group housed in the container member at a temperature in a range of 80 °C to 150 °C; and supplying a nonaqueous electrolyte to the electrode group housed in the container member.
<13> The method for producing a secondary battery according to clause <12>, wherein the drying is performed for in a range of 1 hour to 72 hours.
<14>. The electrode material according to any one of clauses <1> to <6>, wherein the electrode material is a negative electrode material.
<15>. The electrode material according to any one of clauses <1> to <6> and <14>, further comprising at least one selected from the group consisting of lithium titanate having a ramsdellite structure, lithium titanate having a spinel structure, hollandite type titanium composite oxide, and orthorhombic titanium composite oxide.
<16>. The electrode material according to any one of clauses <1> to <6> and <14> to <15>, further comprising a lithium ion conductive solid electrolyte.

While certain approaches have been described, these approaches have been presented by way of example only, and are not intended to limit the scope of the inventions. Indeed, the novel approaches described herein may be embodied in a variety of other forms; furthermore, various omissions, substitutions and changes in the form of the approaches described herein may be made without departing from the spirit of the inventions. The accompanying claims and their equivalents are intended to cover such forms or modifications as would fall within the scope and spirit of the inventions.

## Claims

1. An electrode material (101) comprising at least one of niobium titanium oxide or titanium dioxide, wherein a moisture content measured by a Karl Fischer method is in a range of 2000 ppm or more and 10,000 ppm or less.

2. The electrode material (101) according to claim 1, further comprising at least one of carboxymethylcellulose or a carboxymethylcellulose salt.

3. The electrode material (101) according to claim 1 or claim 2, wherein the moisture content is in a range of 3000 ppm or more and 10,000 ppm or less.

4. The electrode material (101) according to any one of claims 1 to 3, wherein the niobium titanium oxide comprises at least one selected from the group consisting of niobium titanium oxide represented by the general formula LiₓTi_{1-y}M1_{y}Nb_{2-z}M2_{z}O_{7+δ} and niobium titanium oxide represented by the general formula LiₓTi_{1-y}M3_{y+z}Nb_{2-z}O_{7-δ}, where
M1 is at least one selected from the group consisting of Zr, Si, and Sn, M2 is at least one selected from the group consisting of V, Ta, and Bi, M3 is at least one selected from the group consisting of Mg, Fe, Ni, Co, W, Ta, and Mo, x satisfies 0 ≤ x ≤ 5, y satisfies 0 ≤ y < 1, z satisfies 0 ≤ z < 2, and δ satisfies -0.3 ≤ δ ≤ 0.3.

5. The electrode material (101) according to any one of claims 1 to 4, wherein the titanium dioxide comprises at least one selected from the group consisting of monoclinic titanium dioxide, anatase titanium dioxide, rutile titanium dioxide, and bronze titanium dioxide.

6. The electrode material (101) according to any one of claims 1 to 5, further comprising:
an active material-containing layer (103); and
a current collector (102) on which the active material-containing layer (103) is provided, wherein
the active material-containing layer (103) comprises at least one material of the niobium titanium oxide or the titanium dioxide.

7. The electrode material (101) according to any one of claims 1 to 6, wherein the electrode material is a negative electrode material.

8. The electrode material (101) according to any one of claims 1 to 7, further comprising at least one selected from the group consisting of lithium titanate having a ramsdellite structure, lithium titanate having a spinel structure, hollandite type titanium composite oxide, and orthorhombic titanium composite oxide.

9. The electrode material (101) according to any one of claims 1 to 8, further comprising a lithium ion conductive solid electrolyte.
